# EUROPÄISCHE PATENTSCHRIFT

(11) **EP 0 319 821 B1**
(45) Veröffentlichungstag und Bekanntmachung des Hinweises auf die Patenterteilung: **03.02.1993**
(21) Anmeldenummer: 88119831.1
(22) Anmeldetag: 28.11.1988
(51) Int. Cl.: B21D 43/16

(54) **Vorrichtung zur Entsorgung von Schnelläuferpressen**
Device for discharging high-speed presses
Dispositif pour le déchargement de presses rapides

(30) Priorität: 11.12.1987 DE 3742138
(43) Veröffentlichungstag der Anmeldung: 14.06.1989
(73) Patentinhaber: SIEMENS AKTIENGESELLSCHAFT, 80333 München (DE)
(72) Erfinder: Meyer, Dieter, D-8510 Fürth (DE); Kröner, Josef, D-8540 Schwabach (DE)

(56) Entgegenhaltungen:
- DE-A- 2 312 898
- DE-A- 2 650 130
- DE-A- 3 538 258
- FR-A- 2 075 213
- FR-A- 2 103 819
- US-A- 2 542 630
- US-A- 3 555 946
- WERKSTATTSTECHNIK. ZEITSCHRIFT FÜR INDUSTRIELLE FERTIGUNG, Band 74, Nr. 1, Januar 1984, Seiten 9-12; P. FELSMANN: "Materialfluss an einem Blechbearbeitungszentrum"
- SHEET METAL INDUSTRIES, Band 64, Nr. 10, Oktober 1987, Seite 522; B. ASBEY et al.: "Jit process applied to high speed presses"

## Beschreibung

Die Erfindung bezieht sich auf eine Vorrichtung zur Entsorgung von Schnelläuferpressen mit austauschbaren Stanzwerkzeugen, deren Werkzeugunterteil auf einem Pressentisch angeordnet ist, wobei durch das Stanzwerkzeug mit hoher Geschwindigkeit Stanzteile aus einem bandförmigen Halbzeug ausgestanzt und zusammen mit dem Stanzabfall unterhalb des Pressentisches vor dem Abtransport auf Förderbändern separiert werden.

Bei Schnelläuferpressen fallen wegen der hohen Arbeitsgeschwindigkeit pro Zeiteinheit große Mengen Stanzteile und entsprechender Stanzabfall an. Zur Entsorgung solcher Pressen, insbesondere von Präzisionsstanzautomaten, sind Vorrichtungen bekannt, bei denen die Stanzteile und der Stanzabfall separiert werden. Dabei ist für jedes Stanzwerkzeug ein individuelles Magazin zur Ausbringung der Stanzteile vorhanden, sowie mehrere Abführschächte für den Stanzabfall. Da die Werkzeuge insbesondere bei kleinen Losgrößen häufig gewechselt werden, muß entsprechend für jedes Stanzwerkzeug eine entsprechend angepaßte Vorrichtung vorhanden sein. Dies erfordert nicht nur beträchtliche Herstellungskosten für die diesbezüglichen Vorrichtungen, sondern bei jedem Werkzeugwechsel zusätzliche Rüstkosten, die die Wirtschaftlichkeit des gesamten Stanzautomaten beeinträchtigen können.

Aufgabe der Erfindung ist es daher, eine Vorrichtung zur Entsorgung von Schnelläuferpressen zu schaffen, die nicht mehr für jedes einzelne Stanzwerkzeug umgebaut werden muß.

Die Aufgabe ist erfindungsgemäß dadurch gelöst, daß die Vorrichtung aus mehreren hintereinander angeordneten Abführschächten besteht, wobei jeder Abführschacht wahlweise auf ein erstes Förderband zum Abtransport der Stanzteile oder auf ein zweites Förderband zum Abtransport des Stanzabfalles einstellbar ist. Vorzugsweise sind drei Abführschächte vorhanden, die im gleichen Abstand hintereinander am Pressentisch angeflanscht sind. Dabei weist jeder Abführschacht eine Verzweigung mit Weiche auf, wobei die Verzweigungen auf jeweils eines der beiden Förderbänder führen.

Die neue Vorrichtung kann als Zusatzeinrichtung für vorhandene Stanzautomaten verwendet werden, da sie als komplette Baueinheit von unten an den Pressentisch geflanscht wird. Durch die drei vertikalen Schächte, die sich unten teilen, können bereits installierte Stanzteile- und Abfallförderbänder beschickt werden, die unter die erfindungsgemäße Vorrichtung geschoben sind. Dabei sind für den Einsatz dieser Vorrichtung die Durchfallöffnungen für Stanzteile und Stanzabfall im Werkzeugunterteil auf die drei Durchbrüche im Pressentisch abgestimmt. Dies kann durch eine Werkzeuggrundplatte oder eine spezielle Adapterplatte erreicht werden.

Mit der Erfindung lassen sich die bei wechselnden Werkzeugen üblichen Anwendungsfälle abdecken: Je nach Länge der einzelnen Stanzwerkzeuge und deren Streifenbilder kann beispielsweise die Weiche des ersten Fallschachtes zur Abführung beispielsweise eines Vorlochbutzens in Richtung auf das Abfallförderbänder gelenkt und die Weichen des zweiten und dritten Schachtes in entsprechende Stellungen gebracht werden. Insbesondere wird bei kurzen Werkzeugen bereits im zweiten Schacht das Stanzteil fallen, wobei dann im dritten Schacht lediglich noch der zerhackte Reststreifen weggeführt wird. Bei längeren Werkzeugen werden auch im zweiten Schacht Stanzabfälle und erst im dritten Schacht das fertige Stanzteil abgeführt.

Weitere Einzelheiten und Vorteile der Erfindung ergeben sich aus der nachfolgenden Figurenbeschreibung eines Ausführungsbeispieles anhand der Zeichnung in Verbindung mit den Patentansprüchen.

Es zeigen
Fig. 1 a, b und c drei unterschiedliche, bei einer Schnelläuferpresse alternativ zu verwendende Stanzwerkzeuge auf einem Pressentisch in Schnittdarstellung,
Fig. 2 eine erfindungsgemäße Vorrichtung in Vorderansicht, d.h. von der Beckenseite her und
Fig. 3 die gleiche Vorrichtung in Seitenansicht.

Die Figuren sind grob schematisch und nicht maßstäblich zueinander dargestellt und werden nachfolgend teilweise zusammen beschrieben.

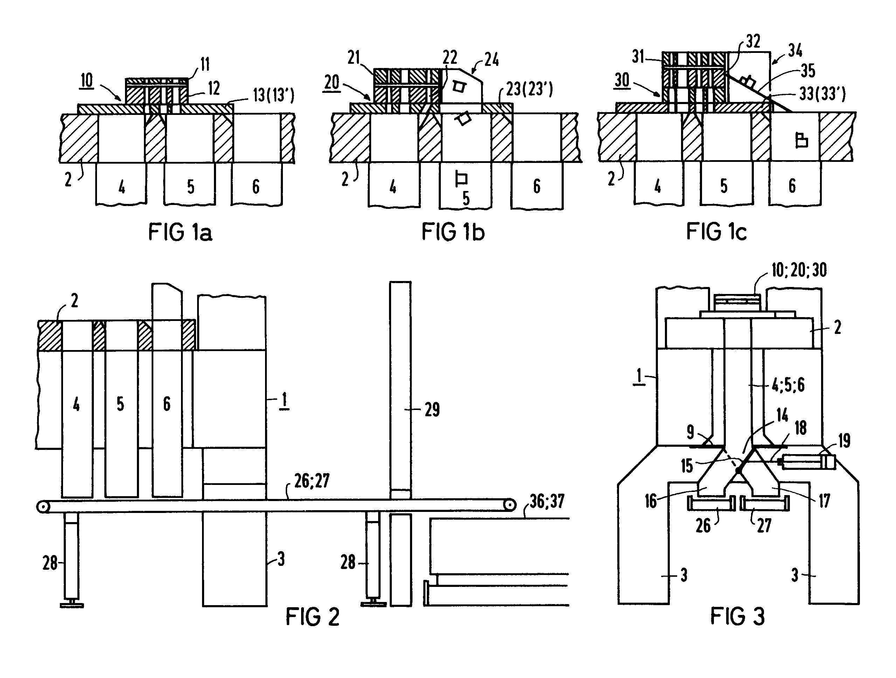

In Fig. 1 a, 1 b und 1 c sind drei unterschiedliche, alternativ zu verwendende Werkzeuge gezeigt, die aus jeweils einem nicht dargestellten Werkzeugoberteil und einem Werkzeugunterteil 10, 20 und 30 bestehen, auf das in diesem Zusammenhang Bezug genommen wird. Die Werkzeugunterteile 10, 20, 30 werden austauschbar am Pressentisch befestigt, wobei in Fig. 1 lediglich eine Tischplatte 2 dargestellt ist. Entsprechend wird das jeweils zugehörige Werkzeugoberteil am Pressenstößel befestigt.

Jedes Werkzeugunterteil 10, 20, 30 besteht aus einer Abstreifplatte 11, 21, 31 einer Schneidplatte 12, 22, 32 und einer Grundplatte 13, 23, 33. Im Zwischenraum von Abstreifplatte und Schneidplatte ist jeweils eine Streifenführung realisiert. Bei schnellem Durchlauf eines von einem Coil abgezogenen, streifenförmigen Halbzeuges werden entsprechend den vorgegebenen Werkzeugen Teile vorgegebener Kontur ausgestanzt. Dabei fallen neben den Stanzteilen auch Stanzabfall an, welche beide für den schnellen Betrieb des Präzisionsautomaten sofort abgeführt werden müssen.

Der Pressentisch 1 der Stanzmaschine hat mehrere Durchbrüche, durch die sowohl die Stanzteile als auch der Stanzabfall fallen können. In Fig. 1 und Fig. 2 sind drei Abführschächte, welche die Durchbrüche derartig durch den Pressentisch 1 mit Tischplatte 2 ergänzen, mit 4 bis 6 gekennzeichnet. Die Abführschächte 4 bis 6 führen auf Förderbänder 26 bzw. 27, die mittels einer Stativanordnung 28 in geeigneter Höhe aufgestellt werden können. Von den Förderbändern 26 bzw. 27 werden die Teile aus dem Maschinenbereich heraustransportiert und durch eine Schallschutzwand 29 abgetrennt in Behälter 36 bzw. 37 für Stanzteile oder Abfall abgelegt.

Aus der Fig. 3 ist der Aufbau eines einzelnen Abführschachtes 4, 5 oder 6 im einzelnen erkennbar: Der gesamte Aufbau ist als komplette Baueinheit mittels eines Flansches 9 am Pressentisch 1 mechanisch befestigt, wobei der Pressentisch 1 des Stanzautomaten mit auf dem Boden stehenden Pressenfuß 3 angeordnet ist. Jeder der Abführschächte 4 bis 6 hat im unteren Bereich etwa in Gestellhöhe eine Verzweigung und gabelt sich dort in Teilschächte, beispielsweise der Schacht 4 über die Verzweigung 14 in die Teilschächte 16 und 17.

Die Teilschächte 16 und 17 verlaufen jeweils schräg in einem Winkel mit einer vertikalen Abkröpfung, und haben im Gabelpunkt der Verzweigung 14 einen mechanisch betätigbare Weiche 15. Dadurch wird gewährleistet, daß beispielsweise durch den Schacht 4 fallende Teile in den einen Teilschacht 16 oder in den anderen Teilschacht 17 umgelenkt werden können. Unterhalb der Teilschächte 16 und 17 befinden sich die beiden Förderbänder 26 und 27 zum Abtransport der Teile. Die Öffnungen der Teilschächte 16 und 17 können mit Gummimanschetten gegenüber den laufenden Förderbändern 26 und 27 abgedichtet sein.

Die einzelnen Weichen lassen sich je nach Auslegung der Stanzmaschine hydraulisch oder pneumatisch betätigen. Dafür ist in der Fig. 3 beispielsweise der Weiche 15 ein Schieber 18 mit Druckluftzylinder 19 zugeordnet. Derartige Druckluftzylinder lassen sich elektrisch umsteuern, so daß die Zuordnung der Abführschächte zu jeweils einem der Förderbänder programmäßig vorgebbar ist.

Für eine weitestgehende Anpassung der Werkzeugunterteile 10, 20, 30 an die im Pressentisch 1 und Tischplatte 2 bereits vorhandenen Durchbrüche lassen sich statt der in beiden Grundplatten der Werkzeugunterteile auch spezifische Adapterplatten 13′, 23′, 33′ verwenden, die in den Fig. 1 a, 1 b und 1 c den Platten 13, 23, 33 entsprechen. Damit werden die anfallenden Teile jeweils in den vorgesehenen Abführschacht 4, 5 oder 6 gelenkt. Speziell für die Stanzteile können Schutzhauben 24 und 34 sowie ggf. eine Schrägrutsche 35 vorhanden sein, die das vorgesehene Abführen der leicht wegspringenden Stanzteile in den entsprechenden Schacht sicherstellen.

In Fig. 1 haben die einzelnen Stanzwerkzeuge der Teilfiguren gemäß den Werkzeugunterteilen 10, 20 und 30 eine unterschiedliche Ausbildung. Je nach Länge der einzelnen Werkzeugunterteile 10, 20, 30 und deren Streifenbilder kann dann die Weiche 15 des ersten Fallschachtes 4 in Richtung auf das Abfallband 26 und die Weiche des zweiten und dritten Schachtes 5 bzw. 6 in die entsprechende Stellung gebracht werden. Die fertigen Stanzteile können somit bei kürzeren Werkzeugen - entsprechend Fig. 1 b - in den zweiten Schacht 5 und bei längeren Werkzeugen - entsprechend Fig. 1 c - in den dritten Schacht 6 fallen. Bei Fig. 1 b kann der Schacht 6 entweder frei bleiben oder den zerhackten Reststreifen aufnehmen.

## Patentansprüche

1. Vorrichtung zur Entsorgung von Schnelläuferpressen mit austauschbaren Stanzwerkzeugen, deren Werkzeugunterteil auf einem Pressentisch angeordnet ist, wobei durch das Werkzeug mit hoher Geschwindigkeit Stanzteile aus einem bandförmigen Halbzeug ausgestanzt und zusammen mit dem Stanzabfall unterhalb des Pressentisches vor dem Abtransport auf Förderbändern separiert werden, **dadurch gekennzeichnet,** daß sie aus mehreren hintereinander angeordneten Abführschächten (4 bis 6) besteht, wobei jeder Abführschacht (4 bis 6) wahlweise auf ein erstes Förderband (26) zum Abtransport der Stanzteile oder auf ein zweites Förderband (27) zum Abtransport des Stanzabfalles einstellbar ist.

2. Vorrichtung nach Anspruch 1, **dadurch gekennzeichnet,** daß drei Abführschächte (4 bis 6) vorhanden sind, die im gleichen Abstand hintereinander am Pressentisch (1) angeflanscht sind.

3. Vorrichtung nach Anspruch 1, **dadurch gekennzeichnet,** daß jeder Abführschacht (4 bis 6) eine Verzweigung (15 bis 17) mit Weiche (15) aufweist, wobei die Verzweigungen (16, 17) auf jeweils ein Förderband (26, 27) führen.

4. Vorrichtung nach Anspruch 3, **dadurch gekennzeichnet,** daß die Weiche (15) mittels eines hydraulisch oder pneumatisch betätigbaren Schiebers (18) jeweils auf eines der Förderbänder (26, 27) umlenkbar ist.

5. Vorrichtung nach Anspruch 1, **dadurch gekennzeichnet,** daß zwischen Werkzeugunterteil (10, 20, 30) und der Tischplatte (2) des Pressentisches (1) Adapterplatten (13′, 23′, 33′) angebracht sind, die auf im Pressentisch (1) bereits vorhandene Durchbrüche abgestimmt sind und diese mit dem jeweiligen Werkzeugunterteil (12, 22, 32) verbinden.

6. Vorrichtung nach einem der vorhergehenden Ansprüche, **dadurch gekennzeichnet,** daß die Zuordnung der Abführschächte (4 bis 6) zu jeweils einem der Förderbänder (26, 27) programmmäßig vorgebbar und umsteuerbar ist.

## Claims

1. Device for the discharge of high-speed presses with exchangeable punching tools, the lower tool part of which is arranged on a pressing table, whereby, by means of the tool, punched parts are punched out of a band-shaped semifinished material at high speed and are separated together with the punched waste underneath the pressing table before being transported away on conveyor belts, characterized in that it comprises several successively arranged removal shafts (4 to 6), whereby each removal shaft (4 to 6) can be selectively adjusted to a first conveyor belt (26) for transporting the punched parts away or to a second conveyor belt (27) for transporting the punched waste away.

2. Device according to claim 1,
characterized in that three removal shafts (4 to 6) are present, which are flange-mounted to the pressing table (1) at the same distance behind one another.

3. Device according to claim 1,
characterized in that each removal shaft (4 to 6) has a branching (15 to 17) with diverter (15), whereby the branchings (16, 17) lead in each case to a conveyor belt (26, 27).

4. Device according to claim 3,
characterized in that the diverter (15) can be deflected by means of a hydraulically or pneumatically operable slide (18) in each case to one of the conveyor belts (26, 27).

5. Device according to claim 1,
characterized in that between lower tool part (10, 20, 30) and the table plate (2) of the pressing table (1) are fitted adapter plates (13', 23', 33') which are coordinated with openings already present in the pressing table (1) and connect these to the associated lower tool part (12, 22, 32).

6. Device according to one of the preceding claims, characterized in that the association of the removal shafts (4 to 6) to one of the conveyor belts (26, 27) in each case can be specified and reversed in terms of programs.

## Revendications

1. Dispositif pour le déchargement de presses rapides comportant des outils interchangeables de découpage, dont la partie inférieure est disposée sur une table de la presse, et dans lequel des pièces découpées par l'outil, sont formées à grande vitesse par découpage à partir d'un produit semi-fini en forme de bande, et sont séparées conjointement avec le déchet de découpage au-dessous de la table de la presse, avant leur évacuation sur des bandes convoyeuses, caractérisé par le fait qu'il est constitué par plusieurs puits d'évacuation (4 à 6) disposés les uns derrière les autres et dont chacun est réglable au choix sur une première bande convoyeuse (26) pour l'évacuation des pièces découpées ou sur une seconde bande convoyeuse (27) pour l'évacuation des chutes de découpage.

2. Dispositif suivant la revendication 1, caractérisé par le fait qu'il est prévu trois puits d'évacuation (4 à 6) qui sont raccordés par bride, les uns derrière les autres et à une même distance, sur la table (1) de la presse.

3. Dispositif suivant la revendication 1, caractérisé par le fait que chaque puits d'évacuation (4 à 6) comporte un embranchement (15 à 17) comportant un aiguillage (15), les embranchements (16,17) aboutissant respectivement sur une bande convoyeuse (26,27).

4. Dispositif suivant la revendication 3, caractérisé par le fait que l'aiguillage (15) peut être dévié, au moyen d'un poussoir (18) à commande hydraulique ou pneumatique, respectivement en direction de l'une des bandes convoyeuses (26,27).

5. Dispositif suivant la revendication 1, caractérisé par le fait qu'entre la partie inférieure (10,20,30) de l'outil et le plateau (2) de la table (1) de la presse sont montées des plaques d'adaptation (13',23',33'), qui sont réglées sur des passages déjà présents dans la table (1) de la presse et relient ces derniers à la partie inférieure (12,22,32) de l'outil.

6. Dispositif suivant l'une des revendications précédentes, caractérisé par le fait que l'association des puits d'évacuation (4 à 6) à respectivement l'une des bandes convoyeuses (26,27) est susceptible d'être prédéterminée et inversée d'une manière programmée.
